# EUROPEAN PATENT SPECIFICATION

(11) **EP 1 447 897 B1**
(45) Date of publication and mention of the grant of the patent: **10.10.2007**
(21) Application number: 04002904.3
(22) Date of filing: 10.02.2004
(51) Int. Cl.: H02J 7/00

(54) **Power management topologies**
Topologie eines Leistungsmanagements
Topologies des gestion d'énergie

(30) Priority: 11.02.2003 US 364228; 03.07.2003 US 484635 P; 29.08.2003 US 652110
(43) Date of publication of application: 18.08.2004
(73) Proprietor: O2 Micro, Inc., Santa Clara, CA 95054 (US)
(72) Inventor: Bucur, Constantin, Santa Clara CA 95051 (US); Popescu-Stanesti, Vlad, San Jose CA 95129 (US); Niculae, Marian, San Jose CA 95130 (US); Nees, Daryl, San Jose CA 95138 (US)
(74) Representative: Lippert, Stachow & Partner

(56) References cited:
- EP-A- 0 660 520
- EP-A- 1 074 851
- US-A- 3 838 327
- US-A- 5 956 222
- US-A- 6 140 801
- US-B1- 6 172 478

## Description

### FIELD OF THE INVENTION

The present invention relates to power management systems, and in particular to various power management topologies for electronic devices.

### BACKGROUND OF THE INVENTION

Various portable electronic devices have a power supply system that monitors, controls, and directs power from various power sources to supply power to the system load of the electronic device. These power sources generally include a fixed output ACDC adapter and one or more rechargeable batteries. The power supply system contains a power conversion block, e.g., a DC to DC converter to convert a fixed DC voltage supplied by the ACDC adapter to a finely controlled variable output DC voltage to charge the battery.

The power supply system operates to supply power to the system from either the ACDC adapter or from the host battery and to perform battery charging if proper conditions are met. As such, there is typically an ACDC source switch for selectively coupling the ACDC adapter to the system, a Battery switch for selectively coupling the host battery to the system, and a charging switch that may connect the host battery to an output of the DC to DC converter for charging. When power is supplied to the system from the ACDC adapter, the ACDC source switch is closed, the Battery switch is open, and the charging switch may either be open or closed. In contrast, when power is supplied to the system from the battery, the Battery switch is closed, the ACDC source switch and the charging switch are open.

In order to be able to charge the battery up to its maximum operating voltage, the output voltage of the ACDC adapter is chosen to be higher (usually at least 1 to 2 V higher) than the maximum operating voltage of the battery. Since the output voltage of the ACDC adapter has a fixed value while the output voltage of the battery may vary largely (depending on its charged state) the ACDC adapter and the battery can not be coupled in parallel to supply power to the system load at certain times. This difference in voltage would lead to undesirable inter-current flow from the higher voltage source (ACDC adapter) to the lower voltage source (battery). As a result, in order to account for transient high power needs of the system, the ACDC adapter is typically oversized, significantly increasing the cost of the power supply system.

In addition, since the ACDC adapter's output voltage is fixed, its output voltage cannot be used to charge the battery which entails fine charging voltage and current control. As such, a second power conversion step accomplished by the DC to DC converter is compulsory. This second power conversion step causes further cost increase and diminishes the overall efficiency of the power supply system.

European patent application EP 0 660 520 A2 refers to a bidirectional current blocking semiconductor switch which has the on resistance of a normal MOSFET and yet does not contain any anti parallel diode across its drain and body terminals. The bidirectional current blocking semiconductor switch disclosed is able to withstand a reversed battery charger condition.

U.S. patent 6,140,801 discloses a charging circuit to direct power to a load comprising an AC adapter and a DC/DC converter generating a voltage requested by the load from the output of the AC adapter or a battery, and supplying it to the load. The charging circuit charges the battery with electric power provided by the AC adapter. When the AC adapter is connected to an AC power supply, a first switch is basically opened when a second switch is closed, and the load is driven by the power obtained through the AC adapter. On the other hand, when the AC adapter is not connected to AC power supply, the first switch is closed when the second switch is opened and the load is driven by the power obtained from the battery.

U.S. 6,172,478 B1 relates to a power distribution system and method for a portable device that is powered by a recharger unit or alternatively a rechargeable battery.

There is a need in the art for power management topologies that enables only one power conversion to provide a controllable DC output to the system load and the battery, or enables a controllable DC power source and battery to be coupled in parallel to supply the system load, or has both features.

### BRIEF SUMMARY OF THE INVENTION

A power supply topology consistent with the invention includes: a first path configured to be coupled to a controllable DC power source; a second path configured to be coupled to a battery; a third path configured to be coupled to a system load, wherein the first, second, and third paths are coupled to a common node; a first switch coupled to the first path to allow selective coupling of the controllable DC power source to the system load via the common node; and a second switch coupled to the second path to allow selective coupling of the battery to the common node.

In another embodiment, a power supply topology consistent with the invention includes: a controllable DC power source; a first path coupled to the controllable DC power source; a second path configured to be coupled to a battery; a third path configured to be coupled to a system load, wherein the first, second, and third paths are coupled to a common node; a first switch coupled to the first path to allow selective coupling of the controllable DC power source to the system load via the common node; and a second switch coupled to the second path to allow selective coupling of the battery to the common node.

In yet a further embodiment, an electronic device including a power supply topology to direct power to various components of the electronic device is provided. The electronic device consistent with the invention includes a power supply topology including: a first path configured to be coupled to a controllable DC power source; a second path configured to be coupled to a battery; a third path configured to be coupled to a system load, wherein the first, second, and third paths are coupled to a common node; a first switch coupled to the first path to allow selective coupling of the controllable DC power source to the system load via the common node; and a second switch coupled to the second path to allow selective coupling of the battery to the common node.

In yet a further embodiment, an electronic device consistent with the invention includes: a controllable DC power source; a first path coupled to the controllable DC power source; a second path configured to be coupled to a battery; a third path configured to be coupled to a system load, wherein the first, second, and third paths are coupled to a common node; a first switch coupled to the first path to allow selective coupling of the controllable DC power source to the system load via the common node; and a second switch coupled to the second path to allow selective coupling of the battery to the common node, wherein the first switch and the second switch have a conduction state responsive to a control signal from a power management control circuit.

In yet another embodiment of the invention, a method of providing power to a system load is provided. The method consistent with the invention includes: providing power from a controllable DC power source to a system load in a first power supply mode; and providing power from the controllable DC power source to the system load and to a battery in a second power supply mode.

In yet a further embodiment, another method of providing power to a system load is provided. The method consistent with the invention includes: accepting a first power level from a first power source; converting the first power level into a dynamically adjustable output DC power level; and providing the output DC power level to the system load in a first power supply mode.

In yet another embodiment, another method of providing power to a system load is provided. The method consistent with the invention includes: providing a controllable DC power source; controlling an output power parameter of the controllable DC power source based on at least one input signal; and selecting a first power supply mode wherein both the controllable DC power source and a battery are coupled in parallel to provide power to a system load.

In yet another embodiment, a power supply system consistent with the invention includes: a controllable DC power source having a dynamically controllable output power parameter; and a power management control circuit configured to control the output power parameter and to select a first power supply mode wherein the controllable DC power source provides power to a system load.

### BRIEF DESCRIPTION OF THE DRAWINGS

Advantages of the present invention will be apparent from the following detailed description of exemplary embodiments thereof, which description should be considered in conjunction with the accompanying drawings, in which:

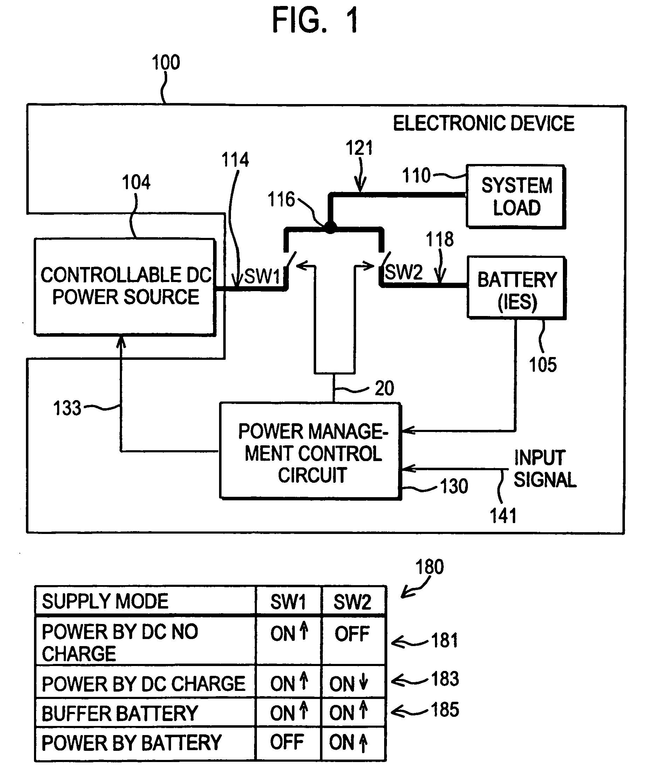

FIG. 1 is a high-level block diagram of an electronic device having a power supply topology including a controllable DC power source and a power management control circuit consistent with the invention;

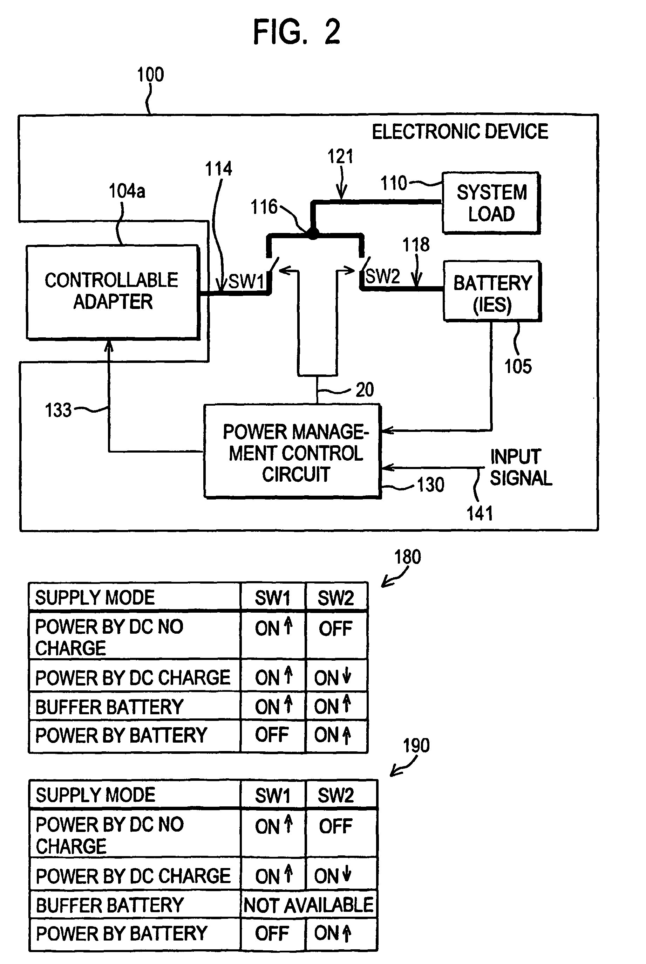

FIG. 2 is a high-level block diagram of one embodiment of a power supply topology of an electronic device consistent with FIG. 1 where the controllable DC power source is a controllable adapter;

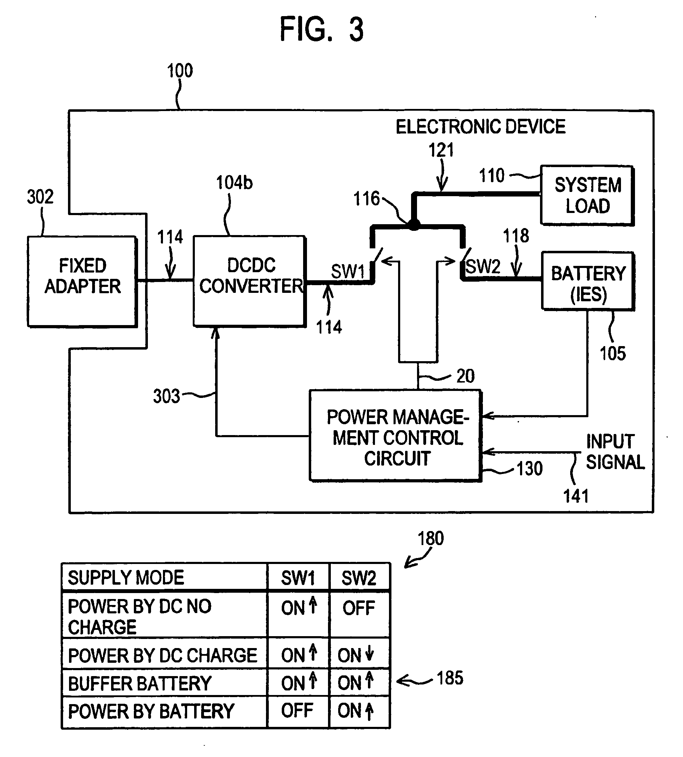

FIG. 3 is a high-level block diagram of another embodiment of a power supply topology of an electronic device consistent with FIG. 1 where the controllable DC power source is a DC to DC converter that may accept power from a fixed output adapter;

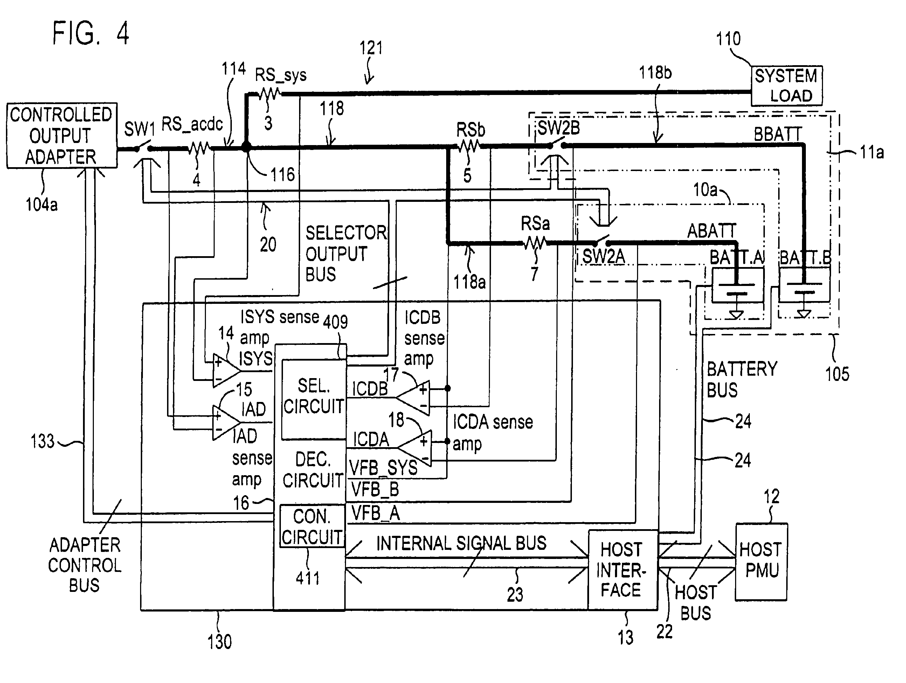

FIG. 4 is a more detailed block diagram of one embodiment of the power supply topology of FIG. 2 where the controllable DC power source is a controllable adapter, the battery source includes a plurality of batteries, and the power supply system includes an adapter sense resistor, a system sense resistor, and a sense resistor for each battery;

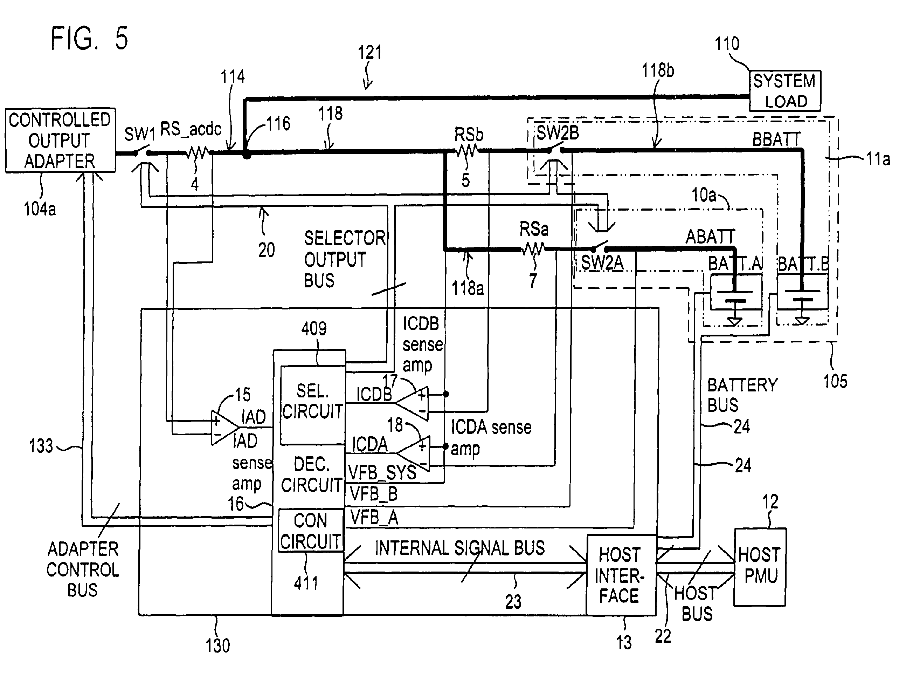

FIG. 5 is a more detailed block diagram of another embodiment of the power supply topology of FIG. 2 where the controllable DC power source is a controllable adapter, the battery source includes a plurality of batteries, and the power supply system includes an adapter sense resistor and a sense resistor for each battery;

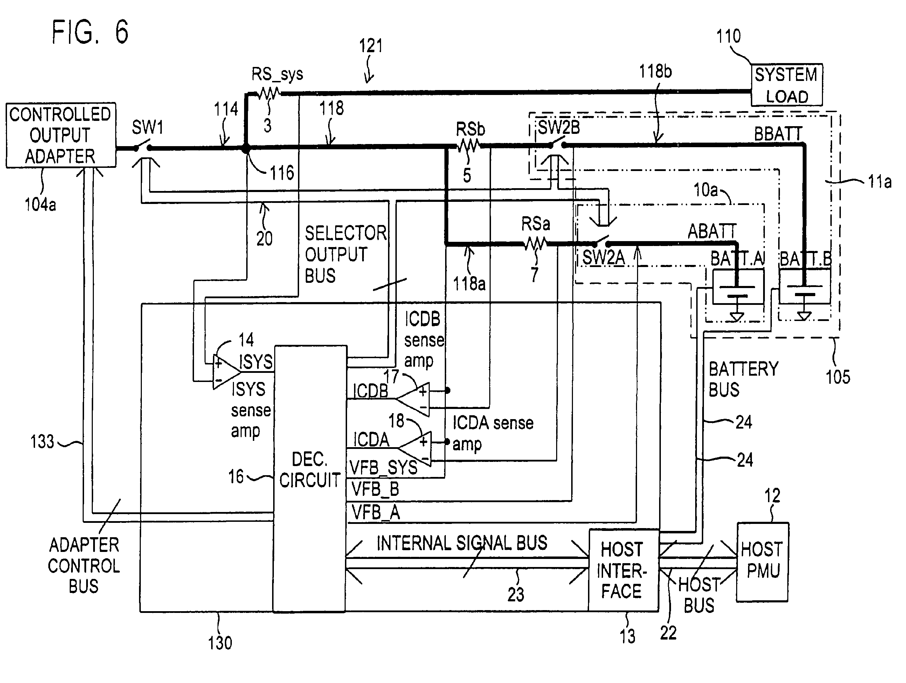

FIG. 6 is a more detailed block diagram of yet another embodiment of the power supply topology of FIG. 2 where the controllable DC power source is a controllable adapter, the battery source includes a plurality of batteries, and the power supply system includes a system sense resistor and a sense resistor for each battery;

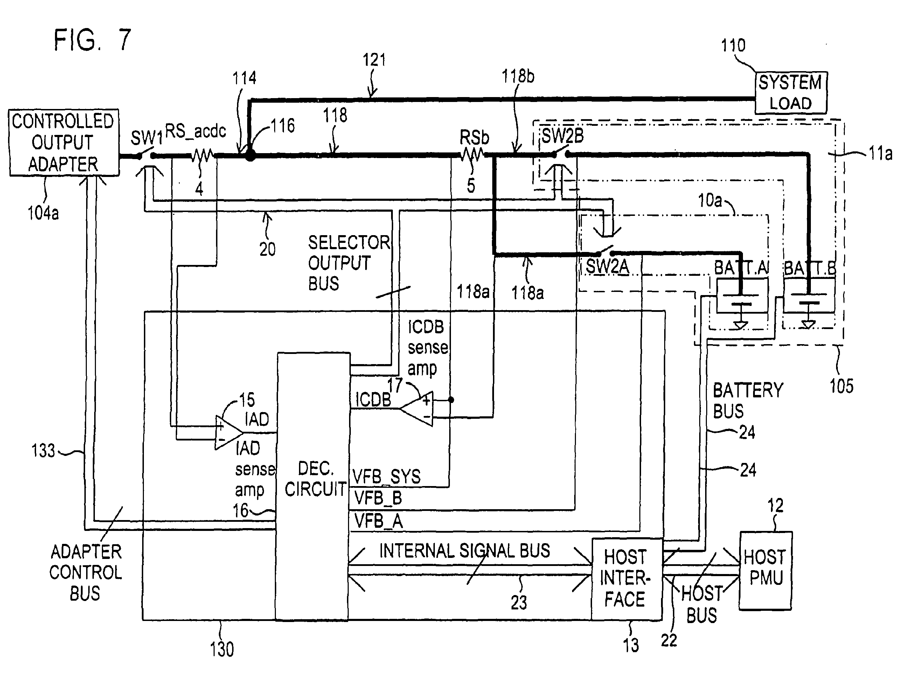

FIG. 7 is a more detailed block diagram of yet another embodiment of the power supply topology of FIG. 2 where the controllable DC power source is a controllable adapter, the battery source includes a plurality of batteries, and the power supply system includes an adapter sense resistor and one battery sense resistor for the battery source;

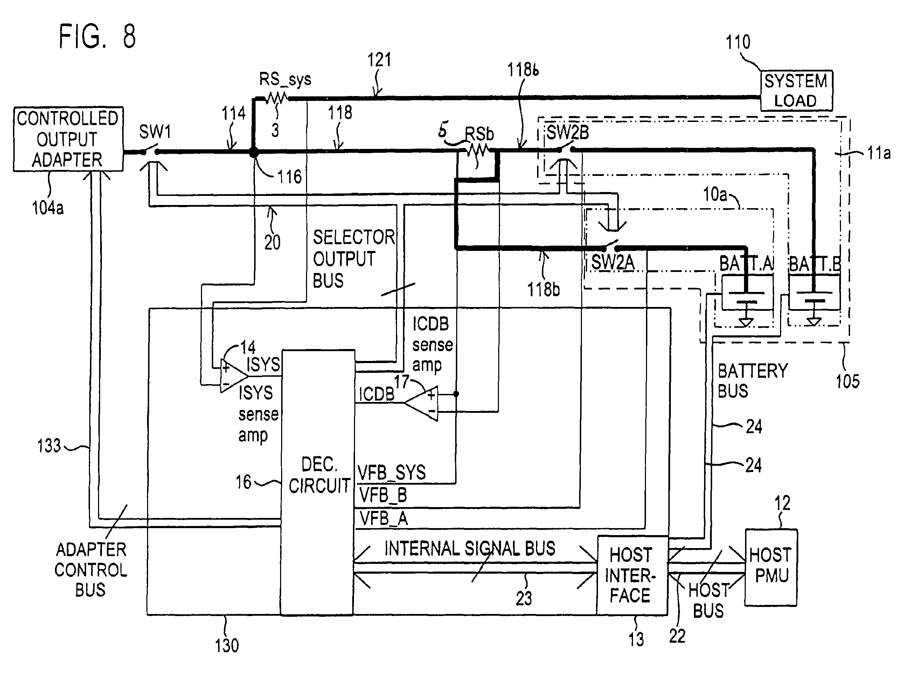

FIG. 8 is a more detailed block diagram of yet another embodiment of the power supply topology of FIG. 2 where the controllable DC power source is a controllable adapter, the battery source includes a plurality of batteries, and the power supply system includes a system sense resistor and one battery sense resistor for a plurality of batteries;

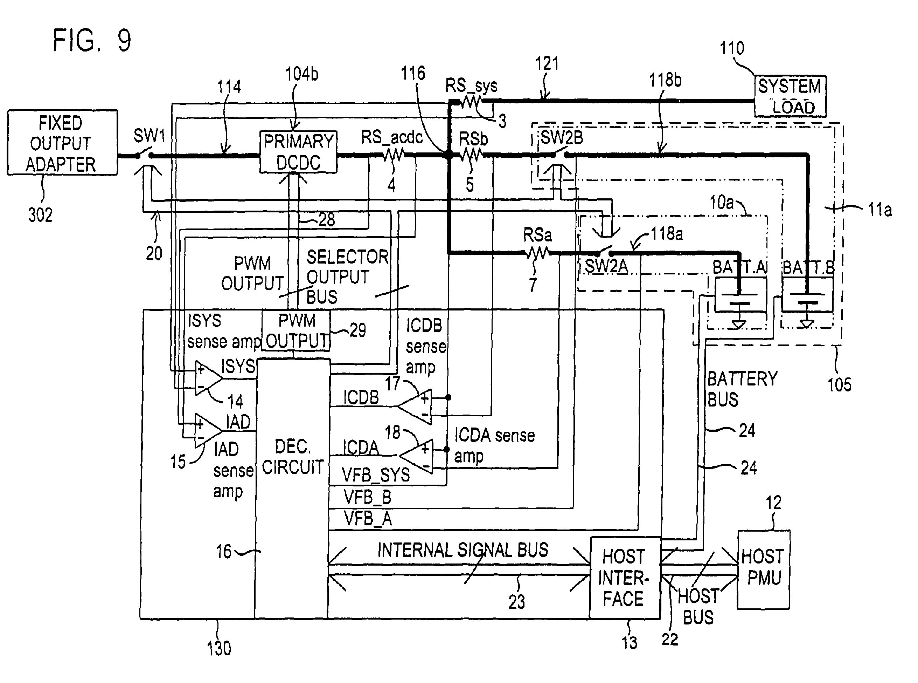

FIG. 9 is a more detailed block diagram of yet another embodiment of the power supply topology of FIG. 3 where the controllable DC power source is a controllable adapter, the battery source includes a plurality of batteries, and the power supply system includes an adapter sense resistor, a system sense resistor, and one battery sense resistor for each battery;

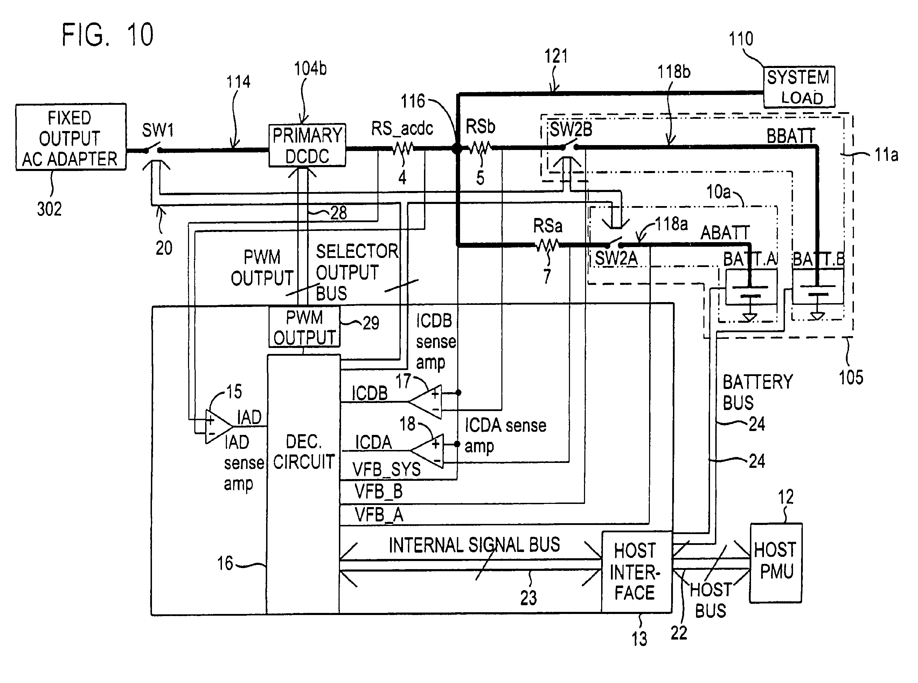

FIG. 10 is a more detailed block diagram of yet another embodiment of the power supply topology of FIG. 3 where the controllable DC power source is a DC to DC converter, the battery source includes a plurality of batteries, and the power supply system includes a DC to DC converter sense resistor at the output of the DC to DC converter and a sense resistor for each battery;

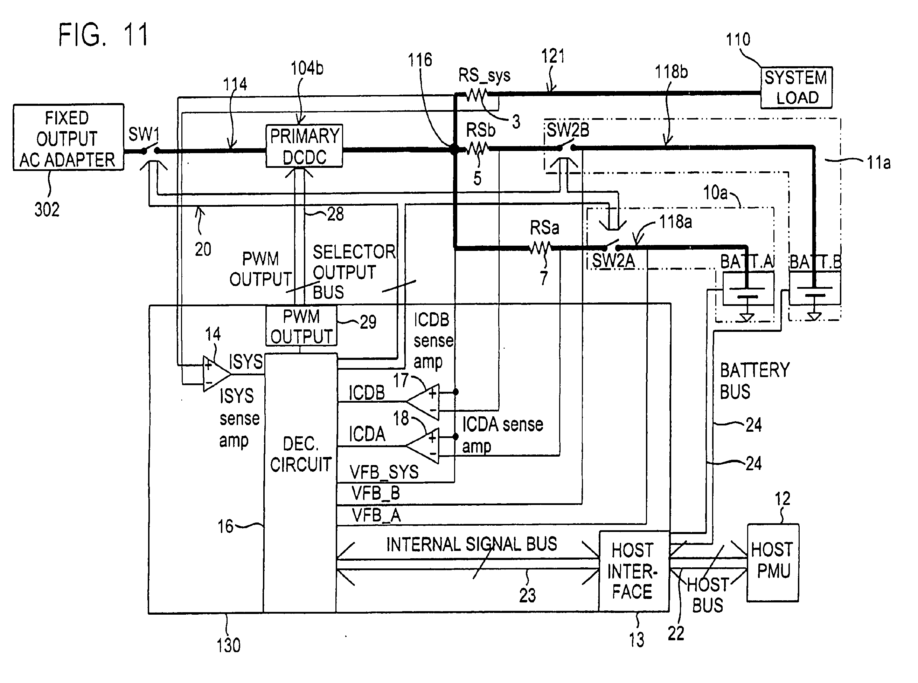

FIG. 11 is a more detailed block diagram of yet another embodiment of the power supply topology of FIG. 3 where the controllable DC power source is a DC to DC converter, the battery source includes a plurality of batteries, and the power supply system includes an system sense resistor and a sense resistor for each battery;

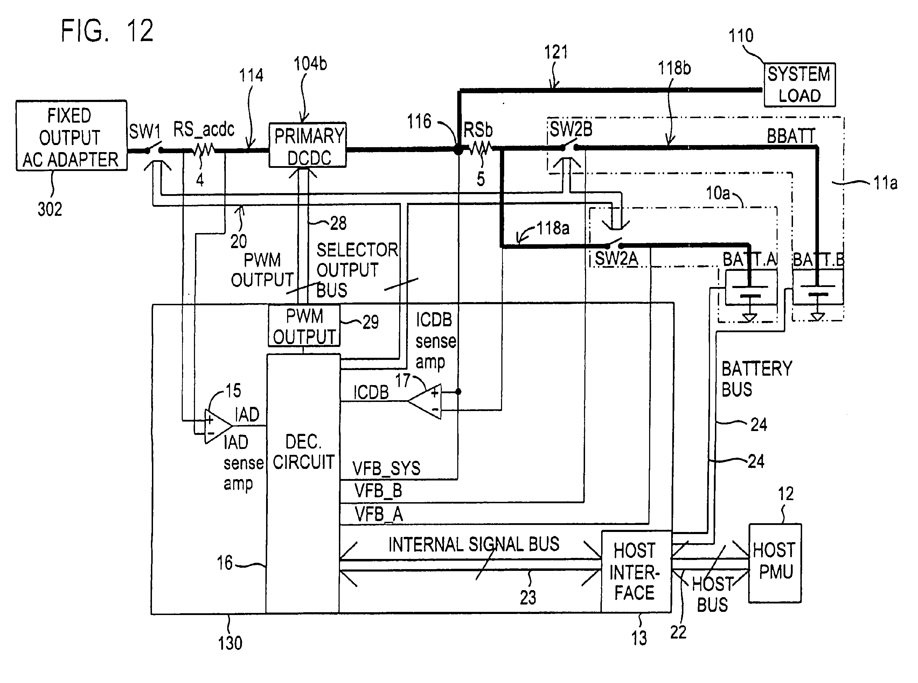

FIG. 12 is a more detailed block diagram of yet another embodiment of the power supply topology of FIG. 3 where the controllable DC power source is a DC to DC converter, the battery source includes a plurality of batteries, and the power supply system includes an adapter sense resistor and one battery sense resistor for the battery source;

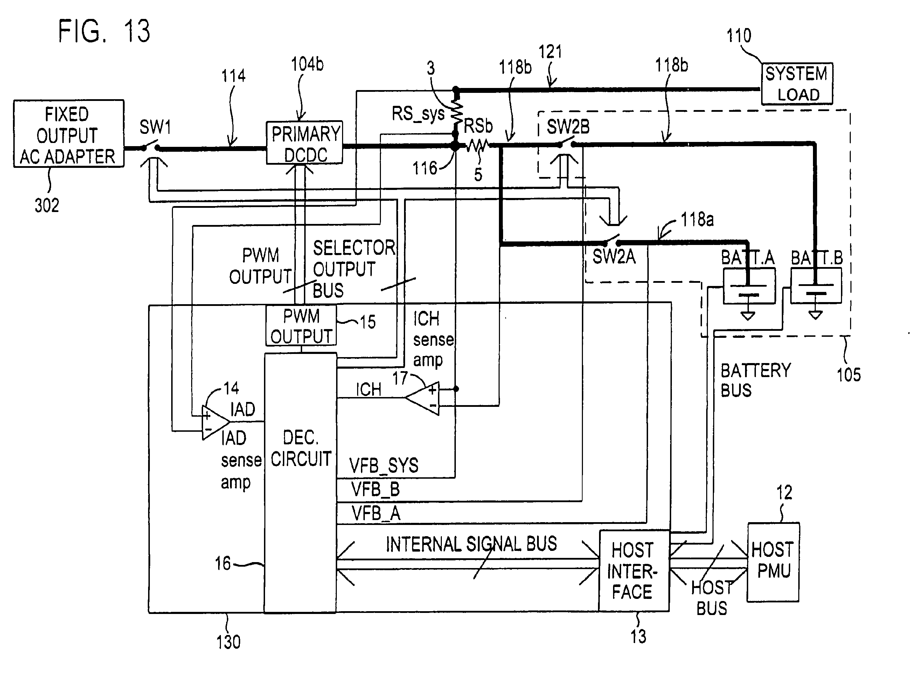

FIG. 13 is a more detailed block diagram of yet another embodiment of the power supply topology of FIG. 3 where the controllable DC power source is a DC to DC converter, the battery source includes a plurality of batteries, and the power supply system includes a system sense resistor and one battery sense resistor for the battery source;

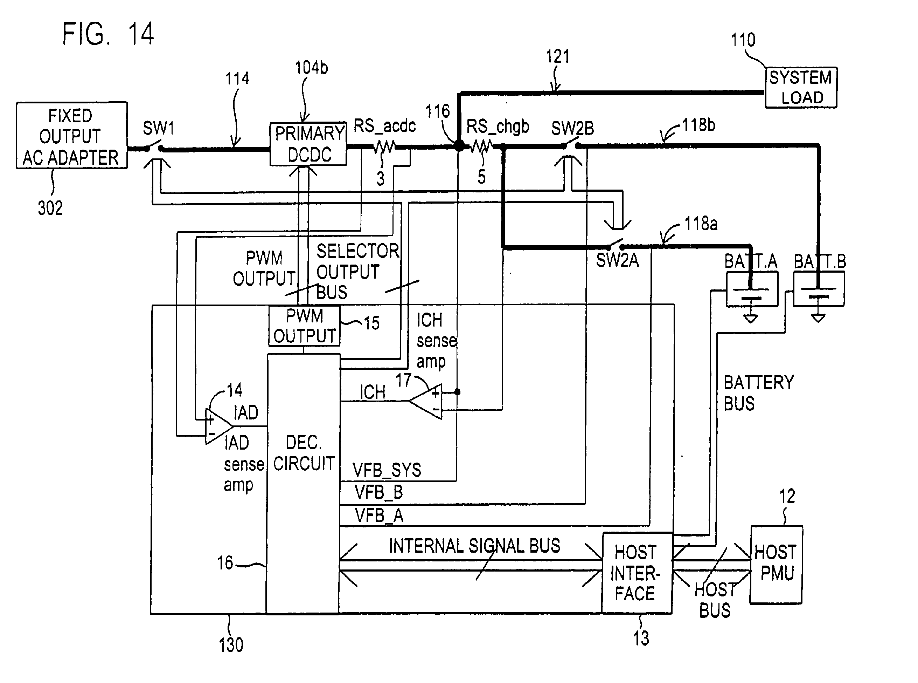

FIG. 14 is a more detailed block diagram of yet another embodiment of the power supply topology of FIG. 3 where the controllable DC power source is a DC to DC converter, the battery source includes a plurality of batteries, and the power supply system includes a DC to DC converter sense resistor at the output of the DC to DC converter and one battery sense resistor for the battery source; and

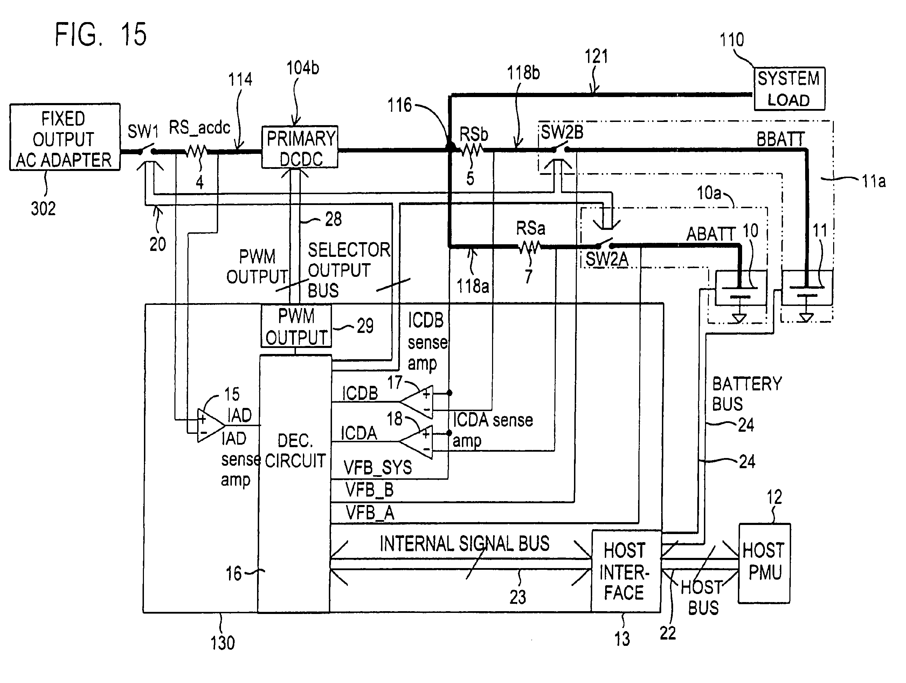

FIG. 15 is a more detailed block diagram of yet another embodiment of the power supply topology of FIG. 3 where the controllable DC power source is a DC to DC converter, the battery source includes a plurality of batteries, and the power supply system includes an adapter sense resistor at the output of the fixed adapter and a sense resistor for each battery.

### DETAILED DESCRIPTION

FIG. 1 illustrates a simplified block diagram of an electronic device 100 having a system load 110 capable of being powered by a controllable DC power source 104, a battery 105, or by both in parallel as the need arises as further detailed herein. A table 180 showing the position of switches SW1 and SW2 in various power supply modes is also illustrated. In one embodiment, the controllable DC power source 104 may be a controllable adapter as further detailed herein, e.g., an ACDC adapter, that provides the only power conversion necessary to deliver power to the system load 110 and the battery 105. As such, the need for an additional power conversion step (e.g., a DC to DC converter to provide a finely controlled output to the battery for charging) typically utilized in other power supply systems is obviated in this instance.

The electronic device 100 may be any variety of devices known in the art such as a laptop computer, cell phone, personal digital assistant, power tool, electric powered vehicle, etc. The controllable DC power source 104 provides a dynamically controllable DC output such as may be available from a controllable adapter or a DC to DC converter as further detailed herein with reference to various embodiments. The controllable DC power source 104 may be separate from or integral with the electronic device 100. The battery 105 may include one battery or a plurality of batteries. A battery may be a rechargeable battery of various types such as lithium-ion, nickelcadmium, nickel-metal hydride batteries, or the like.

The controllable DC power source 104 may be selectively coupled to a node 116 via switch SW1 and path 114. The battery 105 may be selectively coupled to the node 116 via switch SW2 and path 118. The system load 110 may be further coupled to the node 116 via path 121.

In general, a power management control circuit 130 consistent with the invention monitors, controls, and directs power from each power source 104, 105 to the system load 110 and each other (e.g., battery charging) under various conditions. The power management control circuit 130 may receive a variety of input signals along path 141. Such input signals may detail various load conditions, supply conditions, and/ or command signals. The supply condition of the battery 105 may be a power condition such as an output voltage level or an output current level of the battery 105. Similarly, the supply condition of the controllable DC power source 104 may be a power condition such as an output voltage level or an output current level of the source 104. The load condition of the system load 110 may be a power condition such as a required voltage level or required current level of the system load at any particular instant. Those skilled in the art will recognize a variety of ways to provide such input signals to the power management control circuit 130. For instance, a current sense resistor may be provided in series with respective power paths 114,118,121 to provide a signal representative of a current level along each respective path.

In general, the power management control circuit 130 may dynamically adjust an output parameter, e.g., an output voltage level, of the controllable DC power source 104 via an output control signal along path 133 and may select among a plurality of power supply modes by controlling the state of switches SW1 and SW2 via an output control signal along path 20.

Advantageously, in one embodiment, the power management control circuit 130 may select a power supply mode 185 as detailed in table 180 that enables both the controllable DC power source 104 and the battery 105 to be coupled in parallel to provide power to the system load 110. The problem in coupling the controllable DC power source 104 and the battery 105 in parallel is that a difference in voltage level between the two leads to an undesirable inter-current flow from the higher voltage source to the lower voltage source.

This undesirable inter-current flow can be prevented by unidirectional and selectively unidirectional switches to allow current flow in one direction but prevent it in another direction. For instance, switch SW2 may be a selectively unidirectional switch and switch SW1 may be a unidirectional switch as further detailed herein and indicated by the arrows in table 180 of permitted current flow in the buffer battery supply mode 185. In addition, switch SW2 may include a bidirectional discharge switch where undesirable inter-current flow between the controllable DC power source 104 and the battery 105 is controlled by maintaining the voltage level of the controllable DC power source 104 within a tolerance range of the voltage level of the battery 105 as the battery voltage changes, e.g., depending on its charging status.

This parallel supply mode 185 may be selected if instructed by a command signal received via path 141. This supply mode 185 may also be selected in response to a power crises condition. Such a power crises condition may occur when the system load 110 has a load requirement in excess of the maximum power available from the controllable DC power source 104 individually and in excess of the maximum power available from the battery 105 individually. Together however, the power sources may be able to provide enough power to satisfy the load requirement of the system load 110 for the necessary duration. Therefore, the controllable DC power source 104 may not need to be oversized to account for this situation.

In such a parallel power source supply mode 185, the power management control circuit 130 advantageously prevents cross conduction between the controllable DC power source 104 and the battery source 105 by controlling the states of switches SW1 and SW2. Switch SW2 may be a selectively unidirectional switch and switch SW1 may be a unidirectional switch. That is, switch SW2 may allow current flow in one direction only when closed depending on the selected power supply mode or switch SW2 may be open. Switch SW2 may be open when the system load 110 is being powered by the controllable DC power source 104 only (hence switch SW1 is closed) and no charging is taking place (power supply mode 181).

Switch SW2 may have a first discharging closed position in which current is generally only allowed to flow from the battery. For example, in this first discharging closed position current is allowed to flow from the battery 105 to the system load 110 but current is prevented from flowing towards the battery 105 from the controllable DC power source 104. In addition, switch SW2 may also have a second charging closed position in which current is only allowed to flow to the battery. For example, in this second charging closed position current is only allowed to flow to the battery 105 from the controllable DC power source 104 and prevented from flowing from the battery 105 to the system load 100. Switch SW1 may be a unidirectional switch that when closed only allows current flow from the controllable DC power source 104 to node 116.

Hence in a parallel power supply mode 185 where both the controllable DC power source 104 and the battery 105 provide power to the system load 110, switch SW2 may be closed in the first discharging position and switch SW1 may be closed. Hence the battery 105 can supply current to the system load 110 but undesirable inter-current flow from the controllable DC power source 104 to the battery 105 is prevented by the switch SW2. In addition, undesirable inter-current flow from the battery 105 to the DC power source 104 is prevented by unidirectional switch SW1.

Those skilled in the art will recognize a variety of ways a selectively unidirectional switch may be implemented. For instance, a pair of switches coupled in series with each other, and an associated pair of diodes in parallel with each switch, may be utilized. A particular diode may block current flow in one direction while a closed switch may allow current flow in the other direction.

Advantageously, the power management control circuit 130 may select another power supply mode 181 or 183 where the controllable DC power source 104 provides power to the system load 110. The battery 105 may be charged (supply mode 183 of table 180) or may not be charged (supply mode 181 of table 180) in such an instance. In these power supply modes, one of the input signals to the power management circuit 130 along path 114 may be representative of a power requirement of the system load 110, e.g., a voltage requirement, a current requirement, etc. Advantageously, the power management control circuit 130 may be responsive to such a signal to adjust an output parameter, e.g., output voltage level, output current level, etc., of the controllable DC power source 104 to follow the requirement of the system load 110. In one instance, the power management circuit 130 adjusts the output voltage level of the controllable DC power source 104 to be within a predetermined limit of the voltage requirement of the system load 110. As such, power losses and dissipation are limited.

Turning to FIG. 2, the controllable DC power source 104 of FIG. 1 may be a controllable adapter 104a. Advantageously in this instance there is only one power conversion step (e.g., from the input voltage to the controller adapter to the controllable output DC voltage) necessary to supply power to the system load 110 and to the battery 105 for charging. As such, the added power conversion step (e.g., from a DC to DC converter to the battery for charging) is avoided improving power efficiency. In the embodiment of FIG. 2, the buffer battery supply mode previously detailed may be (table 180) or may not be (table 190) available depending on the needs of the desired power supply system.

Other than the controllable adapter 104a other components of the power supply system of FIG. 2 are similar to that of FIG. 1 and, as such, are labeled similarly. Hence, any repetitive description of such components is omitted herein for clarity. The controllable adapter 104a may further be a controllable ACDC adapter that receives conventional AC voltage and converts it to a controllable DC voltage level in response to a control signal along path 133 from the power management control circuit 130. The parameters of the controllable adapter 104a that may be controlled by the power management control circuit 130 include, but are not limited to, output voltage, maximum output power, maximum output current, start-up time, start-up profile, etc. The output voltage of the controller adapter 104a may be dynamically adjusted as controlled by the power management control circuit 130.

Turning to FIG. 3, the controllable DC power source of FIG. 1 may be a DC to DC converter 104b coupled to path 114. Also coupled to path 114 is a switch SW1 and fixed adapter 302. Switch SW1 is illustrated as coupled to path 114 between the DC to DC converter 104b and the node 116. Alternatively, switch SW1 may be coupled between the fixed adapter 302 and the DC to DC converter 104b along path 114 as is further detailed in other embodiments of FIGs. 9 through 15.

In the embodiment of FIG. 3, two power conversions are made rather than one power conversion as illustrated in FIG. 2. That is, the power conversion of the fixed adapter 302 and the DC to DC converter 104b. The embodiment of FIG. 3 still enables the power supply system to be operated in a buffer battery supply mode 185, e.g., to have the battery 105 and the controllable DC power source 104b provide power to the system load 110 concurrently as previously detailed. Other than the DC to DC converter 104b and fixed adapter 302, other components of the power supply system of FIG. 3 are similar to that of FIG. 1 and, as such, are labeled similarly. Hence, any repetitive description of such components is omitted herein for clarity.

The DC to DC converter 104b may be any variety of converters controlled by any variety of control signals along path 303 from the power management control circuit 130. In one embodiment, the DC to DC converter 104b may be a buck converter having a high side switch, a low side switch, and an LC filter as is known in the art. The control signal from the power management circuit 130 may be a pulse width modulated (PWM) signal. The width of the PWM signal controls the duration of the "switch ON" state (high side switch ON and low side switch OFF) and "switch OFF" state (high side switch OFF and low side switch ON) and hence the output voltage and current level of the DC to DC converter 104b.

Turning to FIGs. 4 through 8, various embodiments of power supply systems consistent with the invention are illustrated having a controllable adapter 104a as the controllable DC power source 104 and two batteries (Battery A and B). As such, the embodiments of FIGs. 4 through 8 have one power conversion due to the controllable adapter 104a to supply power to the system load 110 and the battery 105. The one step power conversion embodiments may be used independently of, or together with, the earlier detailed buffer battery power supply mode enabling both the battery and controllable DC power source to provide power to the system load 110.

In contrast, FIGS. 9 through 15 as further detailed herein are directed to additional embodiments having a controllable DC to DC converter 104b as the controllable DC power source 104 and also having two batteries (Batteries A and B). The embodiments of FIGs. 9 through 15 therefore have at least two power conversions due to a fixed adapter 302 and the DC to DC converter 104b.

The embodiment of FIG. 4 may have all the functionality earlier detailed regarding FIG. 1 and FIG. 2. However, the embodiment of FIG. 4 may or may not have the earlier detailed buffer battery power supply mode enabling both the battery and controllable DC power source to provide power in parallel to the system load 110. For instance, a particular power supply system may only desire the one step power conversion and not be concerned with the buffer battery power supply mode.

Some components of FIG. 4 are similar to those components of FIG. 2 and, as such, are labeled similarly. Hence, any repetitive description of the functionality and the repetitive components is omitted herein for clarity. In general, any one or combination of the controllable ACDC adapter 104a, Battery A, or Battery B may power the system load 110 at any one time as controlled by the power management control circuit 130. The system load 110 receives power via path 121 as seen at node 116. The controllable adapter 104a may be selectively coupled to node 116 via switch SW1 and path 114. Battery A may be selectively coupled to node 116 via switch SW2A and path 118a. Similarly, Battery B may be selectively coupled to node 116 via switch SW2B and path 118b. Switch SW1 may be a stand-alone external switch. Switch SW1 may also be a unidirectional switch as earlier detailed. Switches SW2A and SW2B could be stand-alone switches or embedded in battery packs 10a and 11a respectively, e.g., extended battery life approach. Using the power switches embedded in the battery pack would reduce the number of power switches and associated power dissipation. Switches SW2A and SW2B may also be selectively unidirectional switches as earlier detailed.

As earlier alluded, the power management control circuit 130 may receive a variety of input signals along a variety of paths. In the embodiment of FIG. 4, an adapter sense resistor 4, a system sense resistor 3, a Battery A sense resistor 7, and a Battery B sense resistor 5 provide input signals representative of the current level along the respective power paths to the power management control circuit 130. For instance, the adapter sense resistor 4 provides a data signal representative of current flow along path 114 from the controllable adapter 104a. The system sense resistor 3 provides a data signal representative of current flow along path 121 to the system load 110 from any combination of power sources. The Battery A sense resistor 7 provides a data signal representative of current flow along path 118a from or to Battery A. Finally, the Battery B sense resistor 5 provides a data signal representative of current flow along path 118b from or to Battery B.

In addition, input signals representative of the voltage level of Battery A (VFB_A), Battery B (VFB_B), and the system load (VFB_SYS) may also be input to the power management control circuit 130. Furthermore, input signals, e.g., command and data signals may also be input to the power management circuit 130 from a host power management unit (PMU) 12 via host bus 22. The PMU 12 is configured to run various power management routines as is known in the art. Such input signals from the PMU 12 may include, but are not limited to, charging current, charging voltage, adapter controlled preset voltage, adapter power limit, adapter current limit, adapter presence, battery presence, a number of alarm signals such as over-voltage, over-temperature, over current charge or adapter, over-power for the adapter 104a or the system 110. The host bus 22 may have any number of wires and carry any combination of analog and digital command signals. For example, the host bus 22 may be a SMBus if the PMU 12 is configured to run a SMBus protocol routine. The PMU 12 may be a separate component or it may be embedded in a more complex processor of the electronic device 100.

In addition, a battery bus 24 for Batteries A and B may provide additional information to the power management control circuit 130. Such information provided via such bus 24 may be representative of various parameters such as, but not limited to, charging current, charging voltage, battery presence, a number of alarm signals such as over-voltage, over-temperature, or over current.

Turning to the power management control circuit 130, it may include a host interface 13, a plurality of current sense amplifiers 14, 15, 17, 18, associated control and data paths, and a decision circuit 16. The decision circuit 16 may further include a selector circuit 409 to provide a first set of output signals via bus 20 to control the state of switches SW1, SW2A, and SW2B. The decision circuit 16 may also include a control circuit 411 to provide a second set of output signals via path 133 to control an output parameter of the controllable adapter 104a.

The host interface 13 is a generic interface configured to accept an input set of signals from the PMU 12 and to output a converted set of signals to the decision circuit 16 via internal signal bus 23. Such signals provided to the decision circuit 16 may contain voltage and current limits for Battery A, Battery B, the controllable adapter 104a, and the system load 110. The host interface 13 may accept analog or digital signals from the PMU 12.

If the PMU 12 provides digital signals, the host interface may be any variety of digital interfaces such as an SMBus or 12C interface. In this instance, a multiplexer (MUX) and digital to analog converter (DAC) may also be provided in the interface 13 to convert digital to analog signals and to provide the appropriate number of analog signals to the decision circuit 16. The MUX may have any number channels depending, in part, on the number of signals provided to the decision circuit 16.

The plurality of current sense amplifier 14,15,17,18 amplifies signals from the respective sense resistors 3, 4, 5, 7 since the sense resistor is typically quite small. For instance, sense amplifier 14 amplifies the voltage drop across the system sense resistor 3 and provides an ISYS signal representative of the current flow along path 121. Sense amplifier 15 amplifies the voltage drop across the adapter sense resistor 4 and provides an IAD signal representative of the current flow along path 114. Sense amplifier 17 amplifies the voltage drop across the Battery B sense resistor 5 and provides an ICDB signal representative of current flow along path 118b. Finally, sense amplifier 18 amplifies the voltage drop across the Battery A sense resistor 7 and provides an ICDA signal representative of current flow along path 118a.

The ISYS, IAD, ICDB, and ICDA signals from the respective sense amplifiers 14, 15,17,18 may then be provided to the decision circuit 16, and in particular, to the control circuit 411 portion of the decision circuit 16. In addition, the VFB_SYS signal representative of the voltage level of the system load 110, the VFB_B signal representative of the voltage level of Battery B, and the VFB_A signal representative of the voltage level of Battery A may also be provided to the decision circuit 16, and in particular, to the control circuit 411 portion of the decision circuit 16.

The control circuit 411 accepts these input signals ISYS, IAD, ICDB, ICDA, VFB_SYS, VFB_B, and VFB_A and compares such signals to various threshold levels, e.g., as provided by the PMU 12. Based on such comparisons, the control circuit 411 provides the first set of output signals to control an output parameter, e.g., an output voltage level, of the adapter 104a via the adapter control bus 133.

The first set of output signals controls one or more output parameters of the controllable adapter 104a so that the power supply system performs a variety of tasks including those earlier detailed regarding FIGs. 1 and 2. In addition, such tasks may also include at least one of, but not limited to, the following:
- providing all the necessary adapter current up to a maximum output current level of the adapter or up to the power supply limits of the system load 110, and if requested to provide charging current to charge the battery source 105;
- Limiting the total charging current delivered to the battery 105 during a charging mode to the difference between the maximum output current level of the adapter 104a and the required current of the system load 110;
- providing the maximum charging current to each battery (Battery A and B) as long as the maximum charging voltage level has not been reached for any of the batteries;
- providing up to the maximum charging current to the lowest voltage battery as long as the maximum charging voltage has not been reached for any of the batteries; and
- providing a set maximum supply voltage to the system load 110 when no battery is present or no charge request is received.

Those skilled in the art will recognize various ways that such functionality of the control circuit 411 portion of the decision circuit 16 may be accomplished through hardware only, software only, or some combination thereof. For instance, with hardware the control circuit 411 may include a plurality of error amplifiers to compare signals ISYS, IAD, ICDB, ICDA, VFB_SYS, VFB_B, and VFB_A with an associated maximum threshold level for each monitored parameter. The plurality of error amplifiers may be configured as an analog "wired-OR" topology such that the error amplifier that first detects a condition exceeding the associated maximum level controls the command signal to the controllable adapter 104a. An appropriate output signal may then be sent to the controllable adapter 104a, e.g., to lessen an output power parameter of the adapter 104a if a maximum threshold limit is reached.

The second set of output signals provided by the decision circuit 16 via the selector output bus 20 controls the state of switches SW1, SW2A, and SW2B to enable the power supply system to have various power supply modes. Such second set of output signals may be provided by the selector circuit 409 of the decision circuit 16. As a result, various power paths connecting the power sources (adapter 104a, Battery A, and Battery B) to the system load 110 and to each other (e.g., during charging) occur depending on actual supply conditions, events, and requests from the PMU 12. A variety of hardware and/ or software may be utilized to process the variety of input signals to the selector circuit 409 portion of the decision circuit 16 according to a particular processing algorithm. The algorithm should be able to determine the appropriate driving signals to drives switches SW1, SW2A, and SW2B ON and OFF in order to accomplish a variety of tasks including at least one of, but not limited to, the following tasks:
- ensuring an uninterrupted power supply to the system load 110 as long as at least one power source (ACDC adapter 104a, Battery A, Battery B) is present;
- connecting the appropriate battery or batteries to a charging path as requested by the PMU 12;
- connecting the appropriate battery or batteries to a discharging path to supply power to the system load 110 as requested by the PMU 12;
- avoiding cross conduction between batteries when a number of batteries are coupled in parallel and between the ACDC adapter and the batteries in parallel supply mode;
- independently solving any power crises event such as power source connection/ disconnection, short circuits, and the like; and
- independently and safely managing the power supply system when the host PMU 12 fails to send the appropriate control signal.

To accomplish such tasks, especially such tasks dependent on use of two or more batteries (e.g., to avoid cross conduction between batteries), reference should be made to U.S. Patent Application Number 10/364,228 filed February 11, 2003, which discloses a selector circuit that may be utilized as part of a power supply system consistent with the invention.

Turning to FIGs. 5 - 8, various additional embodiments of power supply systems consistent with the invention of FIGs. 1 and 2 are illustrated having a controllable adapter 104a and two batteries (Battery A and B). In general, the main difference between the embodiments of FIGs. 5 - 8 and that earlier detailed regarding FIG. 4 is in the number of sense resistors utilized along various power paths. Otherwise, the functionality of the embodiments is similar to that earlier described with reference to FIG. 4 except that the decision circuit may not receive as many input current signals if less sense resistors are utilized. The embodiment of FIG. 5 has an adapter sense resistor 4, a Battery A sense resistor 7, and a Battery B sense resistor 5. The embodiment of FIG. 6 has a system sense resistor 3, a Battery A sense resistor 7, and a Battery B sense resistor 5. The embodiment of FIG. 7 has an adapter sense resistor 4, and one battery sense resistor 5 sensing current flow along path 118. Finally, the embodiment of FIG. 8 has a system sense resistor 3 and one battery sense resistor 5 sensing current flow along path 118.

Turning to FIGs. 9 -15, various additional embodiments of power supply systems consistent with the invention of FIGS. 1 and 3 are illustrated having a DC to DC converter 104b as the controllable DC power source 104, a fixed adapter 302, and two batteries (Battery A and B) as the battery source 105. In general, the main difference between the embodiments of FIGs. 9 - 15 and that earlier detailed regarding FIGs. 1 and 3 is in the number and position of sense resistors utilized along various power paths.

The embodiment of FIG. 9 has an adapter sense resistor 4, a system sense resistor 3, a Battery A sense resistor 7, and a Battery B sense resistor 5. The embodiment of FIG. 10 has an adapter sense resistor 4, a Battery A sense resistor 7, and a Battery B sense resistor 5. The embodiment of FIG. 11 has a system sense resistor 3, a Battery A sense resistor 7, and a Battery B sense resistor 5. The embodiment of FIG. 12 has an adapter sense resistor 4 and one battery sense resistor 5 sensing current flow along path 118. The embodiment of FIG. 13 has one system sense resistor 3 and one battery sense resistor 5 sensing current flow along path 118. The embodiment of FIG. 14 has one DC to DC converter sense resistor 3 coupled in series along an output path of the DC to DC converter 104b, and one battery sense resistor 5. Finally, the embodiment of FIG. 15 has one adapter sense resistor 4 coupled to an output of the fixed adapter 302 and at an input to the DC to DC converter 104b, a Battery A sense resistor 7, and a Battery B sense resistor 5.

It will be appreciated that the functionality described for the embodiments of the power management control circuit consistent with the invention may also be implemented using software, or a combination of hardware and software, and well-known signal processing techniques. If implemented in software, a processor and machine-readable medium is required. The processor can be any type of processor capable of providing the speed and functionality required by the embodiments of the invention. For example, the processor could be a process from the Pentium® family of processors made by Intel Corporation, or the family of processors made by Motorola. Machine-readable media include any media capable of storing instructions adapted to be executed by a processor. Some examples of such media include, but are not limited to, read-only memory (ROM), random-access memory (RAM), programmable ROM (PROM), erasable programmable ROM (EPROM), electronically erasable programmable ROM (EEPROM), dynamic RAM (DRAM), magnetic disk (e.g. floppy disk and hard drive), optical disk (e.g. CD-ROM), and any other device that can store digital information. In one embodiment, the instructions are stored on the medium in a compressed and/ or encrypted format.

The embodiments that have been described herein, however, are but some of the several which utilize this invention and are set forth here by way of illustration but not of limitation. It is obvious that many other embodiments, which will be readily apparent to those skilled in the art, may be made without departing materially from the scope of the invention as defined in the appended claims.

## Claims

1. A power supply topology comprising:
a first path configured to be coupled to a controllable DC power source;
a second path configured to be coupled to a battery;
a third path configured to be coupled to a system load, wherein said first, second, and third paths are coupled to a common node;
a first switch coupled to said first path to allow selective coupling of said controllable DC power source to said system load via said common node; and
a second switch coupled to said second path to allow selective coupling of said battery to said common node,
**characterized by** a parallel power supply mode where both said controllable DC power source and said battery provide power simultaneously to said system load, wherein said second switch comprises a selectively unidirectional switch having a first discharging closed position configured to permit current flow along said second path in a first direction from said battery to said system load and to prevent current flow along said second path in a second direction opposite said first direction.

2. The power supply topology of claim 1, wherein said first switch is closed and said second switch is open in a first power supply mode wherein said controllable DC power source provides power to said system load.

3. The power supply topology of claim 1, wherein said first switch is closed and said second switch is closed in said first discharging position in a parallel supply mode to permit both said controllable DC power source and said battery to supply power in parallel to said system load.

4. The power supply topology of claim 1, wherein said second switch further comprises a second charging closed position configured to permit current flow in said second direction and to prevent current flow in said first direction along said second path, wherein said first switch is closed and said second switch is closed in said second charging closed position in a charging supply mode to permit said controllable DC power source to provide power to said system load and to provide power to charge said battery.

5. The power supply topology of claim 1, wherein said controllable DC power source comprises a DC to DC converter.

6. The power supply topology of claim 5, further comprising a fixed DC power source coupled to said DC to DC converter via said first path, wherein a first power conversion is made by said fixed DC power source by accepting an input voltage and converting said input voltage to a fixed DC output voltage and a second power conversion is made by said DC to DC converter by accepting said fixed DC output voltage and converting said fixed DC output voltage to a DC output voltage.

7. The power supply topology of claim 6, wherein said first switch is coupled between said fixed DC power source and said DC to DC converter.

8. The power supply topology of claim 6, wherein said first switch is coupled between said DC to DC converter and said common

9. The power supply topology of claim 1, wherein said controllable DC power source comprises a controllable adapter.

10. The power supply topology of claim 9, wherein a first power conversion is made by said controllable adapter by accepting an input voltage and converting said input voltage to an output DC voltage to supply to said system load in said first power supply mode.

11. The power supply topology of claim 9, wherein said controllable adapter comprises an ACDC adapter.

12. An electronic device comprising a power supply topology according to claim 1 to direct power to various components of said electronic device.

13. The electronic device of claim 12, wherein said first switch is closed and said second switch is open in a first power supply mode wherein said controllable DC power source provides power to said system load.

14. The electronic device of claim 12, wherein said second switch comprises a selectively unidirectional switch having a first discharging closed position configured to permit current flow along said second path in a first direction from said battery to said system load and to prevent current flow along said second path in a second direction opposite said first direction.

15. The electronic device of claim 14, wherein said first switch is closed and said second switch is closed in said first discharging position in a parallel supply mode to permit both said controllable DC power source and said battery to supply power in parallel to said system load.

16. The electronic device of claim 14, wherein said second switch further comprises a second charging closed position configured to permit current flow in said second direction and to prevent current flow in said first direction along said second path, wherein said first switch is closed and said second switch is closed in said second charging closed position in a charging supply mode to permit said controllable DC power source to provide power to said system load and to provide power to charge said battery.

17. An electronic device according to claim 12,
wherein said first switch and said second switch have a conduction state responsive to a control signal from a power management control circuit.

18. The electronic device of claim 17, wherein said controllable DC power source comprises a DC to DC converter.

19. The electronic device of claim 18, further comprising a fixed DC power source coupled to said DC to DC converter via said first path, wherein a first power conversion is made by said fixed DC power source by accepting an input voltage and converting said input voltage to a fixed DC output voltage and a second power conversion is made by said DC to DC converter by accepting said fixed DC output voltage and converting said fixed DC output voltage to a DC output voltage.

20. The electronic device of claim 19, wherein said first switch is coupled between said fixed DC power source and said DC to DC converter.

21. The electronic device of claim 19, wherein said first switch is coupled between said DC to DC converter and said common

22. The electronic device of claim 17, wherein said controllable DC power source comprises a controllable adapter.

23. The electronic device of claim 22, wherein a first power conversion is made by said controllable adapter by accepting an input voltage and converting said input voltage to an output DC voltage to supply to said system load in said first power supply mode.

24. The electronic device of claim 22, wherein said controllable adapter comprises an ACDC adapter.

25. A method of providing power to a system load comprising:
providing power from a controllable DC power source to a system load in a first power supply mode; and
providing power from said controllable DC power source to said system load and to a battery in a second power supply mode,
**characterized by** providing power simultaneously from said controllable DC power source and said battery to said system load in a third power supply mode and preventing cross conduction between said controllable DC powder supply source and said battery in said first supply mode.

26. The method of claim 25, wherein said controllable DC power source comprises a controllable ACDC adapter.

27. The method of claim 25, wherein said controllable DC power source comprises a DC to DC converter.

28. A method of claim 25, further comprising:
accepting a first power level from a first power source;
converting said first power level into a dynamically adjustable output DC power level; and
providing said output DC power level to said system load in said first power supply mode.

29. The method of claim 28, further comprising:
providing said output DC power level to said system load and to said battery for charging said battery in a second power supply mode.

30. A method of claim 25, further comprising:
controlling an output power parameter of said controllable DC power source based on at least one input signal; and
selecting said third power supply mode wherein both said controllable DC power source and a battery are coupled in parallel to provide power to a system load.

31. The method of claim 30, wherein said at least one input signal is representative of a power condition of said system load.

32. The method of claim 30, wherein said at least one input signal is representative of a power crises condition wherein an instantaneous power requirement of said system load is greater than a maximum power output of said controllable DC power source and said instantaneous power requirement of said system load is greater than a maximum power output level of said battery.

33. A power supply topology according to claim 1, wherein
said controllable DC power source comprises a dynamically controllable output power parameter; and further comprising
a power management control circuit configured to control said output power parameter and to select a first power supply mode wherein said controllable DC power source provides power to a system load.

34. The power supply topology of claim 33, wherein said power management control circuit is configured to select a second power supply mode wherein said controllable DC source and a battery simultaneously provide power to said system load.

## Patentansprüche

1. Stromversorgungstopologie, umfassend:
einen ersten Pfad, der für die Kopplung mit einer steuerbaren/regelbaren Gleichstromenergiequelle konfiguriert ist;
einen zweiten Pfad, der für die Kopplung mit einer Batterie konfiguriert ist;
einen dritten Pfad, der für die Kopplung mit einem Systemverbraucher konfiguriert ist, wobei der erste, zweite und dritte Pfad mit einem gemeinsamen Knoten gekoppelt sind; einen ersten Schalter, der mit dem ersten Pfad gekoppelt ist, um über den gemeinsamen Knoten ein selektives Koppeln der steuerbaren/regelbaren Gleichstromenergiequelle mit dem Systemverbraucher zu ermöglichen;
und einen zweiten Schalter, der mit dem zweiten Pfad gekoppelt ist, um ein selektives Koppeln der Batterie mit dem gemeinsamen Knoten zu ermöglichen,
**gekennzeichnet durch** einen parallelen Stromversorgungsmodus, in welchem sowohl die steuerbare/regelbare Gleichstromenergiequelle als auch die Batterie gleichzeitig Strom für den Systemverbraucher bereitstellen, wobei der zweite Schalter einen selektiv in einer Richtung wirkenden Schalter umfasst, der eine erste Schließposition für das Entladen aufweist, die derart konfiguriert ist, dass sie Strom entlang des ersten Pfades in einer Richtung von der Batterie zu dem Systemverbraucher fließen lässt und einen Stromfluss entlang des zweiten Pfades in einer zur ersten Richtung entgegen gesetzten Richtung verhindert.

2. Stromversorgungstopologie nach Anspruch 1, wobei in einem ersten Stromversorgungsmodus, in welchem die steuerbare/regelbare Gleichstromenergiequelle Strom für den Systemverbraucher bereitstellt, der erste Schalter geschlossen ist und der zweite Schalter offen ist.

3. Stromversorgungstopologie nach Anspruch 1, wobei in der ersten Position für die Entladung in einem parallelen Versorgungsmodus der erste Schalter geschlossen ist und der zweite Schalter geschlossen ist, um zuzulassen, dass sowohl die steuerbare/regelbare Gleichstromenergiequelle als auch die Batterie parallel Strom an den Systemverbraucher liefern.

4. Stromversorgungstopologie nach Anspruch 1, wobei der zweite Schalter ferner eine zweite Schließposition für das Laden aufweist, die derart konfiguriert ist, dass sie entlang des zweiten Pfades einen Stromfluss in der zweiten Richtung zulässt und einen Stromfluss in der ersten Richtung verhindert, wobei in einem Ladungs-Versorgungsmodus in der zweiten Schließposition für die Ladung der erste Schalter geschlossen ist und der zweite Schalter geschlossen ist, um zuzulassen, dass die steuerbare/regelbare Gleichstromenergiequelle Strom für den Systemverbraucher und Strom für das Laden der Batterie liefert.

5. Stromversorgungstopologie nach Anspruch 1, wobei die steuerbare/regelbare Gleichstromenergiequelle einen DC-DC Wandler umfasst.

6. Stromversorgungstopologie nach Anspruch 5, ferner umfassend eine feste Gleichstromenergiequelle, die über einen ersten Pfad mit dem DC-DC Wandler gekoppelt ist, wobei eine erste Stromumwandlung durch die feste Gleichstromenergiequelle erfolgt, indem eine Eingangsspannung akzeptiert und diese Eingangsspannung in eine feste Gleichstrom-Ausgangsspannung umgewandelt wird, und wobei eine zweite Stromumwandlung durch den DC-DC Wandler erfolgt, indem die feste Gleichstrom-Ausgangsspannung akzeptiert und diese feste Gleichstrom-Ausgangsspannung in eine Gleichstrom-Ausgangsspannung umgewandelt wird.

7. Stromversorgungstopologie nach Anspruch 6, wobei der erste Schalter zwischen der festen Gleichstromenergiequelle und dem DC-DC Wandler gekoppelt ist.

8. Stromversorgungstopologie nach Anspruch 6, wobei der erste Schalter zwischen dem DC-DC Wandler und dem gemeinsamen Knoten gekoppelt ist.

9. Stromversorgungstopologie nach Anspruch 1, wobei die steuerbare/regelbare Gleichstromenergiequelle einen steuerbaren/regelbaren Adapter umfasst.

10. Stromversorgungstopologie nach Anspruch 9, wobei eine erste Stromumwandlung durch den steuerbaren/regelbaren Adapter erfolgt, indem eine Eingangsspannung akzeptiert und diese Eingangsspannung in eine Ausgangs-Gleichspannung umgewandelt wird, die in dem ersten Stromversorgungsmodus dem Systemverbraucher zuzuführen ist.

11. Stromversorgungstopologie nach Anspruch 9, wobei der steuerbare/regelbare Adapter einen AC-DC Adapter umfasst.

12. Elektronische Vorrichtung, umfassend eine Stromversorgungstopologie gemäß Anspruch 1, um Strom zu den verschiedenen Komponenten der elektronischen Vorrichtung zu leiten.

13. Elektronische Vorrichtung nach Anspruch 12, wobei in einem ersten Stromversorgungsmodus, in welchem die steuerbare/regelbare Gleichstromenergiequelle Strom für den Systemverbraucher bereitstellt, der erste Schalter geschlossen ist und der zweite Schalter offen ist.

14. Elektronische Vorrichtung nach Anspruch 12, wobei der zweite Schalter einen selektiv in einer Richtung wirkenden Schalter umfasst, der eine erste Schließposition für die Entladung aufweist, die konfiguriert ist, um Strom entlang des ersten Pfades in einer ersten Richtung von der Batterie zu dem Systemverbraucher fließen zu lassen und um einen Stromfluss entlang des zweiten Pfades in einer zur ersten Richtung entgegen gesetzten Richtung zu verhindern.

15. Elektronische Vorrichtung nach Anspruch 14, wobei in der ersten Position für das Entladen in einem parallelen Versorgungsmodus der erste Schalter geschlossen ist und der zweite Schalter geschlossen ist, um zuzulassen, dass sowohl die steuerbare/regelbare Gleichstromenergiequelle als auch die Batterie parallel Strom an den Systemverbraucher liefern.

16. Elektronische Vorrichtung nach Anspruch 14, wobei der zweite Schalter ferner eine zweite Schließposition für das Entladen aufweist, die konfiguriert ist, um entlang des ersten Pfades einen Stromfluss in der zweiten Richtung zuzulassen und einen Stromfluss in der ersten Richtung zu verhindern, wobei in der zweiten Schließposition für das Laden in einem Versorgungsmodus für das Laden der erste Schalter geschlossen ist und der zweite Schalter geschlossen ist, um zuzulassen, dass die steuerbare/regelbare Gleichstromenergiequelle Strom an den Systemverbraucher liefert und Strom für das Laden der Batterie bereitstellt.

17. Elektronische Vorrichtung nach Anspruch 12, wobei der erste Schalter und der zweite Schalter einen Leitungszustand in Reaktion auf ein Steuer/Regel-Signal aus einer Energiemanagement-Steuer/Regel-Schaltung aufweisen.

18. Elektronische Vorrichtung nach Anspruch 17, wobei die steuerbare/regelbare Gleichstromenergiequelle einen DC-DC Wandler umfasst.

19. Elektronische Vorrichtung nach Anspruch 18, ferner umfassend eine feste Gleichstromenergiequelle, die über den ersten Pfad mit dem DC-DC Wandler gekoppelt ist, wobei eine erste Stromumwandlung durch die feste Gleichstromenergiequelle erfolgt, indem eine Eingangsspannung akzeptiert und diese Eingangsspannung in eine feste Gleichstrom-Ausgangsspannung umgewandelt wird, und wobei eine zweite Stromumwandlung durch den DC-DC Wandler erfolgt, indem die feste Gleichstrom-Ausgangsspannung akzeptiert und diese feste Gleichstrom-Ausgangsspannung in eine Gleichstrom-Ausgangsspannung umgewandelt wird.

20. Elektronische Vorrichtung nach Anspruch 19, wobei der erste Schalter zwischen der festen Gleichstromenergiequelle und dem DC-DC Wandler gekoppelt ist.

21. Elektronische Vorrichtung nach Anspruch 19, wobei der erste Schalter zwischen dem DC-DC Wandler und dem gemeinsamen Knoten gekoppelt ist.

22. Elektronische Vorrichtung nach Anspruch 17, wobei die steuerbare/regelbare Gleichstromenergiequelle einen steuerbaren/regelbaren Adapter umfasst.

23. Elektronische Vorrichtung nach Anspruch 22, wobei eine erste Stromumwandlung durch den steuerbaren/regelbaren Adapter erfolgt, indem eine Eingangsspannung akzeptiert und diese Eingangsspannung in eine Ausgangs-Gleichspannung umgewandelt wird, die in dem ersten Stromversorgungsmodus dem Systemverbraucher zuzuführen ist.

24. Elektronische Vorrichtung nach Anspruch 22, wobei der steuerbare/regelbare Adapter einen AC-DC Adapter umfasst.

25. Verfahren zum Liefern von Energie an einen Systemverbraucher, umfassend:
das Liefern von Energie von einer steuerbaren/regelbaren Gleichstromenergiequelle an einen Systemverbraucher in einem ersten Stromversorgungsmodus; und
das Liefern von Energie von der steuerbaren/regelbaren Gleichstromenergiequelle an den Systemverbraucher und an eine Batterie in einem zweiten Stromversorgungsmodus,
**gekennzeichnet durch** die Lieferung von Energie von der steuerbaren/regelbaren Gleichstromenergiequelle und der Batterie an den Systemverbraucher in einem dritten Stromversorgungsmodus und das Verhindern einer Kreuzleitung zwischen der steuerbaren/regelbaren Gleichstromenergiequelle und der Batterie in dem ersten Versorgungsmodus.

26. Verfahren nach Anspruch 25, wobei die steuerbare/regelbare Gleichstromenergiequelle einen steuerbaren/regelbaren AC-DC Adapter umfasst.

27. Verfahren nach Anspruch 25, wobei die steuerbare/regelbare Gleichstromenergiequelle einen DC-DC Wandler umfasst.

28. Verfahren nach Anspruch 25, ferner umfassend:
das Akzeptieren einer ersten Leistungsstufe von einer ersten Energiequelle;
das Konvertieren der ersten Leistungsstufe in eine dynamisch einstellbare Ausgangs-Gleichspannungsstufe; und
das Bereitstellen der Ausgangs-Gleichspannungsstufe für den Systemverbraucher in dem ersten Stromversorgungsmodus.

29. Verfahren nach Anspruch 28, ferner umfassend:
das Bereitstellen der Ausgangs-Gleichspannungsstufe für den Systemverbraucher und für die Batterie zum Laden der Batterie in einem zweiten Stromversorgungsmodus.

30. Verfahren nach Anspruch 25, ferner umfassend:
das Steuern/Regeln eines Ausgangsleistungs-Parameters der steuerbaren/regelbaren Gleichstromenergiequelle auf der Grundlage von zumindest einem Eingangssignal; und
das Wählen des dritten Stromversorgungsmodus, wobei sowohl die steuerbare/regelbare Gleichstromenergiequelle als auch eine Batterie parallel gekoppelt sind, um Strom an einen Systemverbraucher zu liefern.

31. Verfahren nach Anspruch 30, wobei zumindest ein Eingangssignal repräsentativ ist für einen Energiezustand des Systemverbrauchers.

32. Verfahren nach Anspruch 30, wobei dieses zumindest eine Eingangssignal repräsentativ ist für einen Energiekrisenzustand, in welchem ein momentaner Energiebedarf des Systemverbrauchers höher ist als die maximale Energieabgabe der steuerbaren/regelbaren Gleichstromenergiequelle und in welchem der momentane Energiebedarf des Systemverbrauchers höher ist als das maximale Ausgangsleistungsniveau der Batterie.

33. Stromversorgungstopologie gemäß Anspruch 1, wobei die steuerbare/regelbare Gleichstromenergiequelle einen dynamisch steuerbaren/regelbaren Ausgangsleistungs-Parameter aufweist; und
ferner eine Energiemanagement-Steuer/Regel-Schaltung aufweist, die konfiguriert ist für das Steuern/Regeln des Ausgangsleistungs-Parameters und für das Wählen eines ersten Stromversorgungsmodus, in welchem die steuerbare/regelbare Gleichstromenergiequelle Energie für einen Systemverbraucher bereitstellt.

34. Energieversorgungstopologie nach Anspruch 33, wobei die Energiemanagement-Steuer/Regel-Schaltung konfiguriert ist für das Wählen eines zweiten Stromversorgungsmodus, in welchem die steuerbare/regelbare Gleichstromenergiequelle und eine Batterie gleichzeitig Energie für den Systemverbraucher bereitstellen.

## Revendications

1. Topologie d'alimentation en énergie comprenant :
un premier chemin configuré pour être couplé à une source de courant continu qui peut être commandée ;
un second chemin configuré pour être couplé à une batterie ;
un troisième chemin configuré pour être couplé à une charge système dans laquelle le premier, le second et le troisième chemin sont couplés à un noeud commun ;
un premier commutateur couplé au premier chemin pour permettre le couplage sélectif de la source de courant continu qui peut être commandée à la charge système par l'intermédiaire du noeud commun et
un second commutateur couplé au second chemin pour permettre le couplage sélectif de la batterie au noeud commun,
**caractérisée par** un mode d'alimentation en courant parallèle dans lequel à la fois la source d'alimentation en courant continu qui peut être commandée et la batterie fournissent du courant simultanément à la charge système, dans laquelle le second commutateur comprend un commutateur unidirectionnel de manière sélective qui a une première position fermée de décharge configurée pour permettre le flux de courant le long du second chemin dans une première direction de la batterie vers la charge système et pour empêcher le flux de courant le long du second chemin dans une seconde direction opposée à la première direction.

2. Topologie d'alimentation en énergie selon la revendication 1 dans laquelle le premier commutateur est fermé et le second commutateur est ouvert dans un premier mode d'alimentation en courant dans lequel la source de courant continu qui peut être commandée fournit du courant à la charge système.

3. Topologie d'alimentation en énergie selon la revendication 1 dans laquelle le premier commutateur est fermé et le second commutateur est fermé dans la première position de déchargement dans un mode d'alimentation parallèle pour permettre à la fois à la source de courant continu qui peut être commandée et à la batterie de fournir de l'énergie en parallèle à la charge système.

4. Topologie d'alimentation en énergie selon la revendication 1 dans laquelle le second commutateur comprend de plus une seconde position fermée de charge configurée pour permettre un flux de courant dans la seconde direction et pour empêcher le flux de courant dans la première direction le long du second chemin, dans laquelle le premier commutateur est fermé et le second commutateur est fermé dans la seconde position fermée de charge dans un mode d'alimentation de chargement pour permettre à la source de courant continu qui peut être commandée de fournir de l'énergie à la charge système et de fournir de l'énergie pour charger la batterie.

5. Topologie d'alimentation en énergie selon la revendication 1 dans laquelle la source de courant continu qui peut être commandée comprend un transformateur d'intensité pour courant continu.

6. Topologie d'alimentation en énergie selon la revendication 5 comprenant de plus une source de courant continu fixe couplée au transformateur d'intensité pour courant continu par le premier chemin, dans laquelle une première conversion de courant est faite par la source de courant continu fixe en acceptant une tension d'entrée et en convertissant la tension d'entrée en une tension de sortie en courant continu fixe et une seconde conversion de courant est faite par le transformateur d'intensité pour courant continu en acceptant la tension de sortie en courant continu fixe et en convertissant la tension de sortie en courant continu fixe en une tension de sortie en couran continu.

7. Topologie d'alimentation en énergie selon la revendication 6 dans laquelle le premier commutateur est couplé entre la source de courant continu fixe et le transformateur d'intensité pour courant continu.

8. Topologie d'alimentation en énergie selon la revendication 7 dans laquelle le premier commutateur est couplé entre le transformateur d'intensité pour courant continu et le noeud commun.

9. Topologie d'alimentation en énergie selon la revendication 1 dans laquelle la source de courant continu comprend un adaptateur qui peut être commandé.

10. Topologie d'alimentation en énergie selon la revendication 9 dans laquelle une première conversion de courant est faite par l'adaptateur qui peut être commandé en acceptant une tension d'entrée et en convertissant la tension d'entrée en tension en courant continu de sortie pour alimenter la charge système dans le premier mode d'alimentation en courant.

11. Topologie d'alimentation en énergie selon la revendication 9 dans laquelle l'adaptateur qui peut être commandé comprend un adaptateur courant alternatif courant continu.

12. Dispositif électronique comprenant une topologie d'alimentation en énergie selon la revendication 1 pour diriger l'énergie vers différents composants du dispositif électronique.

13. Dispositif électronique selon la revendication 12 dans lequel le premier commutateur est fermé et le second commutateur est ouvert dans un premier mode d'alimentation en courant dans lequel la source de courant continu qui peut être commandée fournit du courant à la charge système.

14. Dispositif électronique selon la revendication 12 dans lequel le second commutateur comprend un commutateur unidirectionnel de manière sélective qui a une première position fermée de déchargement configurée pour permettre le flux de courant le long du second chemin dans une première direction de la batterie à la charge système et pour empêcher le flux de courant le long du second chemin dans une seconde direction opposée à la première direction.

15. Dispositif électronique selon la revendication 14 dans lequel le premier commutateur est fermé et le second commutateur est fermé dans la première position de déchargement dans un mode d'alimentation parallèle pour permettre à la fois à la source de courant continu qui peut être commandée et à la batterie de fournir du courant en parallèle à la charge système.

16. Dispositif électronique selon la revendication 14 dans lequel le second commutateur comprend de plus une seconde position fermée de chargement configurée pour permettre le flux de courant dans la seconde direction et pour empêcher le flux de courant dans la première direction le long du second chemin, dans lequel le premier commutateur est fermé et le second commutateur est fermé dans la seconde position fermée de chargement dans un mode d'alimentation de chargement pour permettre à la source de courant continu qui peut être commandée de fournir de l'énergie à la charge système et de fournir de l'énergie à la batterie.

17. Dispositif électronique selon la revendication 12 dans lequel le premier commutateur et le second commutateur ont un état de conduction qui réagit à un signal de commande d'un circuit de commande de gestion d'énergie.

18. Dispositif électronique selon la revendication 17 dans lequel la source de courant continu qui peut être commandée comprend un transformateur d'intensité pour courant continu.

19. Dispositif électronique selon la revendication 18 comprenant de plus un source de courant continu fixe couplée au transformateur d'intensité pour courant continu par le premier chemin dans lequel une première conversion de courant est faite par la source de courant continu fixe en acceptant une tension d'entrée et en convertissant la tension d'entrée en une tension de sortie courant continu fixe et une seconde conversion de courant est faite par le transformateur d'intensité pour courant continu en acceptant la tension de sortie en courant continu fixe et en convertissant la tension de sortie en courant continu fixe en une tension de sortie en courant continu.

20. Dispositif électronique selon la revendication 19 dans lequel le premier commutateur est couplé entre la source de courant continu fixe et le transformateur d'intensité pour courant continu.

21. Dispositif électronique selon la revendication 19 dans lequel le premier commutateur est couplé entre le transformateur d'intensité pour courant continu et le noeud commun.

22. Dispositif électronique selon la revendication 17 dans lequel la source de courant continu comprend un adaptateur qui peut être commandé.

23. Dispositif électronique selon la revendication 22 dans lequel une première conversion de courant est faite par l'adaptateur qui peut être commandé en acceptant une tension d'entrée et en convertissant la tension d'entrée en tension en courant continu de sortie pour alimenter la charge système dans le premier mode d'alimentation en courant.

24. Dispositif électronique selon la revendication 22 dans lequel l'adaptateur qui peut être commandé comprend un adaptateur courant alternatif courant continu.

25. Procédé pour fournir de l'énergie à une charge système comprenant :
la fourniture de l'énergie d'une source de courant continu pouvant être commandée à une charge système dans un premier mode d'alimentation en courant et
la fourniture de l'énergie de la source de courant continu pouvant être commandée à la charge système et à une batterie dans un second mode d'alimentation en courant,
**caractérisé par** la fourniture de l'énergie simultanément de la source de courant continu pouvant être commandée et de la batterie à la charge système dans un troisième mode d'alimentation en courant et l'empêchement de la conduction croisée entre la source d'alimentation en courant continu pouvant être commandée et la batterie dans le premier mode d'alimentation.

26. Procédé selon la revendication 25 dans lequel la source d'alimentation en courant continu pouvant être commandée comprend un adaptateur courant alternatif courant continu pouvant être commandé.

27. Procédé selon la revendication 25 dans lequel la source de courant continu pouvant être commandée comprend un transformateur d'intensité pour courant continu.

28. Procédé selon la revendication 25 comprenant de plus:
l'acceptation d'un premier niveau de courant d'une première source de courant ;
la conversion du premier niveau de courant en un niveau de courant continu de sortie ajustable dynamiquement et
la fourniture du niveau de courant continu de sortie à la charge système dans le premier mode d'alimentation en courant.

29. Procédé selon la revendication 28 comprenant de plus :
la fourniture du niveau de courant continu de sortie à la charge système et à la batterie pour charger la batterie dans un second mode d'alimentation en courant.

30. Procédé selon la revendication 25 comprenant de plus :
la commande d'un paramètre de courant de sortie de la source de courant continu pouvant être commandée basé sur au moins un signal d'entrée et
la sélection du troisième mode d'alimentation en courant dans lequel à la fois la source d'alimentation en courant continu pouvant être commandée et une batterie sont couplées en parallèle pour fournir du courant à une charge système.

31. Procédé selon la revendication 30 dans lequel le signal de sortie qui existe au moins est représentatif d'une condition de courant de la charge système.

32. Procédé selon la revendication 30 dans lequel le signal d'entrée qui existe au moins est représentatif d'une condition de crise d'énergie dans laquelle une exigence momentanée d'énergie de la charge système est supérieure à une sortie d'énergie maximale de la source de courant continu pouvant être commandée et l'exigence momentanée d'énergie de la charge système est supérieure à un niveau de sortie de courant maximal de la batterie.

33. Topologie d'alimentation en énergie selon la revendication 1 dans laquelle la source de courant continu pouvant être commandée comprend un paramètre de courant de sortie pouvant être commandé dynamiquement et comprenant de plus
un circuit de commande de gestion d'énergie configuré pour commander le paramètre de courant de sortie et pour sélectionner un premier mode d'alimentation en courant dans lequel la source de courant continu pouvant être commandée fournit de l'énergie à une charge système.

34. Topologie d'alimentation en énergie selon la revendication 33 dans laquelle le circuit de commande de gestion d'énergie est configuré pour sélectionner un second mode d'alimentation en courant dans lequel la source de courant continu pouvant être commandée et une batterie fournissent simultanément de l'énergie à la charge système.
